# EUROPEAN PATENT APPLICATION

(11) **EP 2 690 202 A1**
(43) Date of publication of application: **29.01.2014**
(21) Application number: 12763597.7
(22) Date of filing: 22.03.2012
(51) Int. Cl.: C25D 9/10, B32B 15/08, C09D 5/08, C09D 7/12, C09D 133/02, C09D 135/00

(54) **SURFACE TREATMENT AGENT COMPOSITION, METHOD FOR PRODUCING SURFACE-TREATED STEEL SHEET, SURFACE-TREATED STEEL-SHEET, SURFACE-TREATED STEEL SHEET WITH ORGANIC COATING, CAN LID, CAN BODY, AND SEAMLESS CAN**

(30) Priority: 25.03.2011 JP 2011067939
(71) Applicant: Nippon Paint Co., Ltd., Osaka-shi Osaka 531-8511 (JP); Toyo Seikan Group Holdings, Ltd., Shinagawa-ku, Tokyo 1418627 (JP); Toyo Kohan Co., Ltd., Tokyo 102-8447 (JP)
(72) Inventor: UCHIKAWA, Miwa, Tokyo 140-8675 (JP); MATSUKAWA, Masahiko, Tokyo 140-8675 (JP); HIRANO, Tomio, Tokyo 140-8675 (JP); KUROKAWA, Wataru, Yokohama-shi Kanagawa 230-0001 (JP); HIROTSU, Munemitsu, Yokohama-shi Kanagawa 230-0001 (JP); KANAZAWA, Seitaro, Yokohama-shi Kanagawa 230-0001 (JP); YOSHIMURA, Kunihiro, Kudamatsu-shi Yamaguchi 744-8611 (JP); TAYA, Shinichi, Kudamatsu-shi Yamaguchi 744-8611 (JP); TAGUCHI, Naomi, Kudamatsu-shi Yamaguchi 744-8611 (JP)
(74) Representative: HOFFMANN EITLE
(86) International application number: PCT/JP2012/057349
(87) International publication number: WO 2012/133112

(57) **Abstract**

The purpose of the present invention is to provided: a surface treatment agent composition for non-chromium steel sheets whereby it is possible to remove iron ions without reducing the amount of aluminum ions when subjecting the steel sheet to surface treatment by means of cathodic electrolysis using a surface treatment agent containing aluminum ions as the main component; and a method for producing a surface-treated steel sheet using such a composition. Another purpose of the present invention is to provide a surface-treated steel sheet exhibiting higher corrosion resistance than prior art, a surface-treated steel sheet with an organic coating, and a can lid, can body and seamless can using the aforementioned surface-treated steel sheets. A surface treatment agent composition for steel sheets contains aluminum ions, fluorine ions and polycarboxylic acid and is used as the surface treatment bath used for forming a surface treatment coating film on the surface of the steel sheet by means of cathodic electrolysis.

## Description

### TECHNICAL FIELD

The present invention relates to a surface treatment agent composition for producing a surface-treated steel sheet, a method for producing a surface-treated steel sheet using the surface treatment agent composition, a surface-treated steel-sheet, a surface-treated steel sheet with an organic coating, a can lid, a can body, and a seamless can. More specifically, the invention relates to a surface treatment agent composition that allows production of a surface-treated steel sheet having excellent high-speed processing ability, corrosion resistance, and coating adhesion and exhibiting excellent processing adhesion even in severe processing thereof and that is a chromium-free composition having excellent bath stability, a method for producing a surface-treated steel sheet using the surface treatment agent composition, a surface-treated steel sheet, surface-treated steel sheet with an organic coating, a can lid, a can body, and a seamless can.

### BACKGROUND ART

Chromate treatment has heretofore been known as treatment for improving the adhesion between a steel sheet and an organic coating and has therefore been widely used in the fields of home electric appliances, building materials, vehicles, aircrafts, and containers and other fields because of its provision of excellent corrosion resistance and adhesion.

The chromate treatment is roughly classified based on the treatment methods into a chemical conversion-type (reaction type·coating type) and an electrolytic type and is roughly classified based on the film formation into a type of which end product contains a small amount of residual hexavalent chromium for more highly utilizing the self-repair effect and a type of which end product does not contain hexavalent chromium.

Even if the chromate treatment is employed for metal materials for metal containers, the chromate treatment is a type in which hexavalent chromium does not remain in end products. The treatment liquid, however, contains hexavalent chromium, which is a harmful material, and therefore involves various environmental problems. That is, it is necessary to perform, for example, completely drainage and exhaust of the - treatment liquid containing the hexavalent chromium not to discharge to the outside, and therefore a huge amount of money is necessary for drainage and exhaust processing facilities and waste disposal. Furthermore, regulations against transfer and exhaust of wastewater treatment sludge have become strict, and therefore there is a demand for developing a chromium-free surface treatment that is comparable to the conventional chromate treatment.

As chromium-free surface treatment for steel sheet materials, immersion treatment and cathodic electrolytic treatment using a treatment liquid containing Zr (zirconium) or Ti (titanium) have been proposed (Patent Literatures 1, 2, and 3).

Cathodic electrolytic treatment using a treatment liquid containing Al (aluminum) ions has also been proposed (Patent Literature 4).
[Patent Document 1] PCT International Application, Publication No. 2002/103080
[Patent Document 2] Japanese Unexamined Patent Application, Publication No. 2004-190121
[Patent Document 3] Japanese Unexamined Patent Application, Publication No. 2005-97712
[Patent Document 4] Japanese Unexamined Patent Application, Publication No. 2006-348360

### DISCLOSURE OF THE INVENTION

### Problems to be Solved by the Invention

The present inventors have found this time that in the case of using a treatment liquid containing aluminum ions, the corrosion resistance of the resulting film is deteriorated with an increase in concentration of iron ions in a treatment bath eluted from a steel sheet as the base material. Accordingly, in order to maintain the corrosion resistance of the resulting film, it is necessary to remove the iron ions from the treatment bath.

However, it is difficult to selectively remove iron ions, and, usually, aluminum ions are also removed together with the iron ions. In such a case, since the aluminum ions, which are a film forming component, are also removed, the film deposition efficiency of aluminum decreases to reduce the film amount, resulting in a problem of reducing the corrosion resistance of the film.

Accordingly, it is an object of the present invention to provide a chromium-free surface treatment agent composition for a steel sheet allowing removal of iron ions without reducing the amount of the aluminum ions in the surface treatment of the steel sheet by cathodic electrolysis using the surface treatment agent composition mainly containing aluminum ions, and to provide a method of producing a surface-treated steel sheet using the composition.

In addition, it is an object of the present invention to provide a surface-treated steel sheet and a surface-treated steel sheet with an organic coating having high corrosion resistance compared to those of conventional technologies and to provide a can lid, a can body, and seamless can produced from these steel sheets.

### Means for Solving the Problems

(1) The present invention relates to a surface treatment agent composition for a steel sheet, the composition being used in electrolytic surface treatment of a steel sheet having a surface to which iron is at least partially exposed, and the composition including aluminum ions, fluorine ions, and a polycarboxylic acid.

The polycarboxylic acid is preferably a homopolymer containing a monomer selected from acrylic acid, methacrylic acid, maleic acid, and itaconic acid as a constitutional unit or a copolymer containing at least one of these monomers as the constitutional unit.

A ratio [carboxyl group]/[Al] of a molar concentration [carboxyl group] of carboxyl groups contained in the polycarboxylic acid to a molar concentration [A1] of the aluminum ions is preferably 0.005 to 2.0.

The polycarboxylic acid is preferably polyitaconic acid.

A ratio [F]/[Al] of a molar concentration [F] of the fluorine ions to a molar concentration [Al] of the aluminum ions is preferably 1 to 4.

A mass concentration of the aluminum ions is preferably 100 to 10000 ppm.

The surface treatment agent composition preferably has a pH value of 1 to 5 at 25°C.

The surface treatment agent composition preferably contains iron ions having a mass concentration of 200 ppm or less.

(2) The present invention relates to a method of producing a surface-treated steel sheet. The method comprises subjecting a steel sheet having a surface to which iron is at least partially exposed to cathodic electrolysis in a surface treatment bath containing aluminum ions, fluorine ions, and a polycarboxylic acid to form a treatment film on the surface of the steel sheet, wherein
the treatment film contains a metal-oxygen compound and a polycarboxylic acid;
the metal-oxygen compound contains oxygen compounds of aluminum and iron in which the main component is the aluminum-oxygen compound; and
the treatment film has an aluminum amount of 5 to 150 mg/m² and a carbon amount of 0.1 to 5.0 mg/m², in terms of metal element.

The polycarboxylic acid is preferably a homopolymer containing a monomer selected from acrylic acid, methacrylic acid, maleic acid, and itaconic acid as a constitutional unit or a copolymer containing at least one of these monomers as the constitutional unit.

In the surface treatment bath, a ratio [carboxyl group]/[Al] of a molar concentration [carboxyl group] of carboxyl groups contained in the polycarboxylic acid to a molar concentration [Al] of the aluminum ions is preferably 0.005 to 2.0.

The polycarboxylic acid is preferably polyitaconic acid.

In the surface treatment bath, a ratio [F]/[Al] of a molar concentration [F] of the fluorine ions to a molar concentration [Al] of the aluminum ions is preferably 1 to 4.

In the surface treatment bath, a mass concentration of the aluminum ions is preferably 100 to 10000 ppm.

The surface treatment bath preferably has a pH value of 1 to 5 at 25°C.

The surface treatment bath preferably contains iron ions having a mass concentration of 200 ppm or less.

(3) The present invention relates to a surface-treated steel sheet having a surface treatment film containing a metal-oxygen compound and a polycarboxylic acid formed on a steel sheet having a surface to which iron is at least partially exposed, wherein
the metal-oxygen compound contains aluminum and iron and mainly includes an aluminum-oxygen compound; and
the surface treatment film has an aluminum amount of 5 to 150 mg/m² and a carbon amount of 0.1 to 5.0 mg/m², in terms of metal element.

The surface treatment film preferably has an atomic ratio (Fe/Al) of iron to aluminum of 0.5 or less.

The polycarboxylic acid is preferably a homopolymer containing a monomer selected from acrylic acid, methacrylic acid, maleic acid, and itaconic acid as a constitutional unit or a copolymer containing at least one of these monomers as the constitutional unit.
(4) The present invention relates to a surface-treated steel sheet with an organic coating, wherein a thermoplastic resin is laminated on at least one surface of the surface-treated steel sheet.
(5) The present invention relates to a surface-treated steel sheet with an organic coating, wherein a thermosetting resin is laminated on at least one surface of the surface-treated steel sheet.
(6) The present invention relates to a can lid molded from the surface-treated steel sheet with an organic coating according to the aspect (4) or (5).
(7) The present invention relates to a can body molded from the surface-treated steel sheet with an organic coating according to the aspect (4) or (5).
(8) The present invention relates to a seamless can molded from the surface-treated steel sheet with an organic coating according to the aspect (4) or (5) by drawing·bending-stretching and/or ironing.

In the present invention, the surface treatment agent composition for a steel sheet contains a polycarboxylic acid. Accordingly, in a treatment bath using this surface treatment agent composition for a steel sheet, the polycarboxylic acid captures iron ions eluted into the treatment bath from the steel sheet to maintain the concentration of iron ions in the treatment bath to be a certain level or less, resulting in formation of a film having high corrosion resistance.

The polycarboxylic acid used in the present invention captures and precipitates iron ions eluted into a treatment bath to reduce the iron ion concentration in the treatment bath to 200 ppm or less, which is a level that does not affect the characteristics of the resulting film, and also the polycarboxylic acid does not affect the aluminum ion concentration in the treatment bath. Consequently, a stable treatment bath can be maintained.

Furthermore, in the present invention, a film having controlled amounts of aluminum ions and a polycarboxylic acid is formed, which allows retaining of the conditions of the outermost surface of the film to maintain the stable surface even under a high-temperature high-humidity environment. Even though the film is chromium-free, the film can retain the corrosion resistance of the surface-treated steel sheet and can inhibit a reduction in adhesion to the organic coating.

### Effects of the Invention

The present invention provides a chromium-free surface treatment agent composition for a steel sheet allowing removal of iron ions without reducing the amount of the aluminum ions, in the surface treatment of the steel sheet by cathodic electrolysis using the surface treatment agent composition mainly containing aluminum ions, and provides a method of producing a surface-treated steel sheet using the composition.

The present invention provides a surface-treated steel sheet and a surface-treated steel sheet with an organic coating having high corrosion resistance compared to those of conventional technologies and a can lid, a can body, and seamless can produced from these steel sheets.

### PREFERRED MODE FOR CARRYING OUT THE INVENTION

### (Steel sheet)

The steel sheet used in the present invention may be any steel sheet used in can manufacturing, such as a cold rolled steel sheet. In can manufacturing, the thickness of the steel sheet is preferably about 0.07 to 0.4 mm.

Throughout the specification, the term "steel sheet" refers to one whose iron exposed to at least a part of a surface other than the end faces.

### (Surface treatment agent composition for steel sheet and surface treatment bath)

The surface treatment agent composition for a steel sheet of the present invention contains aluminum ions and a polycarboxylic acid, which is an important characteristic of the invention. In the case of using such a surface treatment agent composition for a steel sheet as a surface treatment bath, the polycarboxylic acid contained in the treatment bath captures the iron ions eluted into the treatment bath from the steel sheet, but hardly capture aluminum ions. Consequently, the iron ion concentration in the treatment bath can be maintained to be a certain level or less without decreasing the aluminum ion concentration in the treatment bath. That is, the polycarboxylic acid contained in the surface treatment bath forms chelates with iron ions to inhibit iron ions from being excessively introduced into a film and partially becomes a constituent component of the film and contributes to the adhesion of the organic coating.

The "surface treatment bath (hereinafter may be also referred to as simply "treatment bath")" described in the following description mainly includes the surface treatment agent composition for a steel sheet of the present invention and is used in electrolytic surface treatment of a steel sheet having a surface to which iron is at least partially exposed. In the following description, the surface treatment agent composition for a steel sheet is also referred to as simply "surface treatment agent composition".

The concentration of the polycarboxylic acid in the surface treatment agent composition is controlled such that the ratio [carboxyl group]/[Al] of the molar concentration [carboxyl group] of the carboxyl groups contained in the polycarboxylic acid to the molar concentration [Al] of the aluminum ions is preferably in a range of 0.005 to 2.0, more preferably 0.01 to 1.0, and most preferably 0.017 to 0.069. That is, as described above, the polycarboxylic acid has a function of forming chelates with iron ions to inhibit iron ions from being excessively introduced into a film and partially becomes a constituent component of the film. However, a concentration of the polycarboxylic acid higher than the above-mentioned range may excessively introduce the polycarboxylic acid into a film to reduce the corrosion resistance and is disadvantageously uneconomical. In contrast, a concentration of the polycarboxylic acid lower than the above-mentioned range may not sufficiently introduce to capture iron ions in the treatment bath and may reduce the adhesion with the organic coating.

Note that throughout the specification, the molar concentration of aluminum ions is the molar concentration in terms of aluminum metal. Aluminum ions in the surface treatment agent composition are partially in forms of complexes in which fluorine ions described below or various ligands are coordinated. In the present invention, these complexes are included in the definition of aluminum ions.

The treatment bath contains iron ions eluted from the steel sheet. As described above, a large amount of iron ions in the treatment bath reduces the corrosion resistance of the resulting film. Accordingly, in the present invention, it is preferred to maintain the iron ion concentration in the treatment bath to be 200 ppm or less, in particular, 100 ppm or less.

The surface treatment agent composition of the present invention is preferably an aqueous solution having a pH value of 1 to 5 at 25°C, more preferably 2.0 to 4.5, and most preferably 2.5 to 3.5. A pH value lower than the above-mentioned range causes excessive etching of the steel sheet to increase the iron ion concentration in the treatment bath, whereas a pH value higher than the range causes lack of etching to prevent efficient formation of a film and to make the treatment bath unstable.

Examples of the aluminum ion source for supplying aluminum ions to the surface treatment agent composition include aluminum nitrate, potassium aluminum sulfate, aluminum sulfate, aluminum dihydrogen phosphate solution, aluminum dihydrogen phosphate, aluminum lactate, aluminum fluoride, aluminum hydroxide, aluminum oxide, aluminum silicate, aluminate salts such as sodium aluminate, and sodium hexafluoroaluminate. These aluminum ion sources may be used alone or in combination of two or more thereof.

The mass concentration of aluminum ions in the surface treatment agent composition is preferably 100 to 10000 ppm. A content of aluminum ions of 100 ppm or more in the surface treatment agent composition allows formation of a film having sufficiently high corrosion resistance on the surface of a steel sheet, which is preferable, and a content of 10000 ppm or less can maintain satisfactory solubility of the aluminum ions in the surface treatment agent composition to form a uniform film on the surface of a steel sheet. The content of aluminum ions in the surface treatment agent composition is more preferably 1000 to 5000 ppm and most preferably 1500 to 5000 ppm in terms of aluminum metal.

The polycarboxylic acid contained in the surface treatment agent composition is, for example, a homopolymer containing a monomer selected from acrylic acid, methacrylic acid, maleic acid, and itaconic acid as a constitutional unit or a copolymer containing at least one of these monomers as the constitutional unit. Examples of the homopolymer include polyacrylic acid, polymethacrylic acid, polymaleic acid, and polyitaconic acid. Among these homopolymers, in particular, polyitaconic acid can be preferably used.

These polycarboxylic acids may be alkali metal salts or ammonium salts thereof.

The polycarboxylic acid preferably has a molecular weight in a range of 90 to 1000000, in particular, 1000 to 70000.

In a case of using a copolymer mentioned above as the polycarboxylic acid, the copolymer may be a copolymer of two or more of the above-mentioned monomers or a copolymer of one or more of the above-mentioned monomers and another monomer. Examples of such "another monomer" include vinyl compounds such as N-vinylpyrrolidone, N-vinylcarbazole, N-vinyloxazoline, N-vinyl-1,2,4-triazole, N-vinylcarbazole, N-vinylphthalimide, N-vinyl succinimide, N-vinylimidazole, vinyl sulfonic acid, 2-sulfoethyl (meth)acrylate, and vinyl sulfonic acid; vinyl ketones such as methyl vinyl ketone, phenyl vinyl ketone, and divinyl ketone; acrylamide-based monomers such as (meth)acrylamide, N-methylol (meth)acrylamide, N,N-dimethyl (meth)acrylamide, N,N-dibutyl (meth)acrylamide, N,N-dioctyl (meth)acrylamide, N-monobutyl (meth)acrylamide, N-monooctyl (meth)acrylamide, N-isopropylacrylamide, acryloyl morpholine, N,N-dimethylaminopropyl acrylamide, diacetone acrylamide, N-2-hydroxyethyl acrylamide, and 2-acrylamide-2-methylsulfonic acid; (meth)acrylate ester monomers such as methyl (meth)acrylate, ethyl (meth)acrylate, n-butyl (meth)acrylate, isobutyl acrylate, tert-butyl (meth)acrylate, 2-ethylhexyl (meth)acrylate, lauryl methacrylate, phenyl acrylate, isobornyl (meth)acrylate, cyclohexyl methacrylate, tert-butylcyclohexyl (meth)acrylate, dicyclopentadienyl (meth)acrylate, dihydrodicyclopentadienyl (meth)acrylate, N,N-dimethylaminoethyl acrylate, 2-methacryloyloxyethylsuccinic acid, ethylene glycol dimethacrylate, glycerin dimethacrylate, methoxytriethylene glycol-2-hydroxyethyl (meth)acrylate, 2-hydroxypropyl (meth)acrylate, 4-hydroxybutyl (meth)acrylate, methoxy polyethylene glycol methacrylate, and methoxy polyethylene glycol dimethacrylate; polymerizable nitriles such as acrylonitrile and methacrylonitrile; alkyl vinyl ethers such as methyl vinyl ether, ethyl vinyl ether, n-propyl vinyl ether, isopropyl vinyl ether, n-butyl vinyl ether, isobutyl vinyl ether, and tert-butyl vinyl ether; polymerizable aromatic compounds such as styrene, α-methylstyrene, tert-butylstyrene, para-chlorostyrene, vinyl naphthalene, and p-styrene sulfonic acid; vinyl esters such as vinyl acetate, vinyl propionate, vinyl butyrate, vinyl trimethylacetate, vinyl caproate, vinyl caprylate, vinyl laurate, and vinyl stearate; conjugated dienes such as butadiene and isoprene; olefins such as ethylene, propylene, 1-butene, isobutylene, and 3-methyl-1-butene; and allyl compounds such as allyl chloride, diallyl phthalate, allyl alcohol, and allylsulfonic acid. These monomers may be used alone or in combination of two or more thereof as the "another monomer".

The surface treatment agent composition of the present invention further contains fluorine ions. Examples of the fluorine ion source for supplying fluorine ions to the surface treatment agent composition include hydrofluoric acid, sodium fluoride, ammonium fluoride, ammonium hydrogen fluoride, sodium hydrogen fluoride, and potassium fluoride. These fluorine ion sources may be used alone or in combination of two or more thereof. The ratio [F]/[Al] of the molar concentration [F] of the fluorine ions to the molar concentration [Al] of the aluminum ions is preferably 1 to 4. A ratio [F]/[Al] of 1 or more sufficiently solubilizes the aluminum ions in the surface treatment agent composition to advantageously allow an improvement of uniformity of the film formed on the surface of a steel sheet. A ratio of 4 or less can inhibit excessive etching of the steel sheet by fluorine ions and allows formation of a film having sufficient corrosion resistance on the surface of the steel sheet. The ratio [F]/[Al] is more preferably 1.5 to 3.5 and most preferably 0.65 to 2.16. The concentration of aluminum ions is the mass concentration in terms of aluminum metal, and the concentration of fluorine ions is mass concentration in terms of fluorine. The molar ratio [F]/[Al] of fluorine ions to aluminum ions is calculated from molar concentrations (mmol/L) of the aluminum ions and the fluorine ions determined from their mass concentrations (ppm). The concentration of aluminum ions can be measured with an inductively coupled plasma emission spectrometer (ICP). The concentration of fluorine ions can be measured by ion chromatography.

The surface treatment agent composition of the present invention may further contain nitrate ions, a peroxide, and a complexing agent, as necessary. The nitrate ions have an effect of maintaining the stability of a precipitation state for a long-term electrolysis. Usable examples of the ion source include nitric acid, sodium nitrate, potassium nitrate, and ammonium nitrate. The peroxide generates oxygen in an aqueous solution and thereby shows an effect of inhibiting concentration polarization in the periphery of the surface of a cathode and is particularly useful when the stirring in the bath is weak. Usable examples of the peroxide include hydrogen peroxide, ammonium peroxodisulfate, potassium peroxodisulfate, sodium peroxoborate, sodium peroxocarbonate, and sodium peroxodisulfate. The complexing agent works so as to inhibit generation of precipitate in the bath, and usable examples thereof include ethylenediaminetetraacetic acid, sodium ethylenediaminetetraacetate, citric acid, sodium citrate, boric acid, nitrilotriacetic acid, sodium nitrilotriacetate, cyclohexanediaminetetraacetic acid, glycine, citric acid, gluconic acid, malonic acid, succinic acid, tartaric acid, phosphonic acid, and ethylenediaminetetraacetic acid. Note that too high concentrations of the nitrate ions, the peroxide, and the complexing agent tend to reduce the deposition efficiency.

The surface treatment agent composition of the present invention may further contain an antibacterial agent, a surfactant, a corrosion inhibitor, and other components, as necessary. Usable examples of these components include alcohols such as ethanol and isopropanol, guanidine group-containing compounds such as polyhexamethylene biguanidine hydrochloride, benzimidazole-based antibacterial agents such as 2-(4-thiazolyl)-benzimidazole and methyl-2-benzimidazole carbamate, phenol-based antibacterial agents such as p-chloro-m-xylenol and p-chloro-m-cresol, nitrile-based antibacterial agents such as 2,4,5,6-tetrachloroisophthalonitrile and 1,2-dibromo-2,4-dicyanobutane, pyridine-based antibacterial agents such as sodium (2-pyridylthio-1-oxide) and zinc bis(2-pyridylthio-1-oxide), isothiazolone-based antibacterial agents such as 2-methyl-4-isothiazolin-3-one and 5-chloro-2-methyl-4-isothiazolin-3-one, quaternary ammonium salts such as benzalkonium chloride and benzethonium chloride, benzoic acid, ethyl p-oxybenzoate, sorbic acid, potassium sorbate, sodium dehydroacetate, sodium propionate, nonionic surfactants, cationic surfactants, anionic surfactants, tannic acid, imidazoles, triazines, guanines, hydrozines, and biguanide. In order to improve the adhesion with an organic resin film, the surface treatment agent composition may further contain a silane-coupling agent, colloidal silica, an amine, and a water-soluble phenol-based organic compound containing a phenolic resin.

The surface treatment agent composition of the present invention may contain an inorganic material, as necessary, in addition to aluminum, fluorine, and iron. Examples of the inorganic material include, but not limited to, zirconium and titanium.

### (Method of producing surface-treated steel sheet)

Prior to surface treatment, a steel sheet is pretreated. Examples of the pretreatment include, as common processes, degreasing and water washing and, as necessary, cleansing of the surface through pickling and water washing.

A surface-cleaned steel sheet is subjected to cathodic electrolysis in a current density range of 0.5 to 100 A/dm² in a treatment bath at a temperature of 30°C to 65°C with stirring. The steel sheet is washed with water into a surface-treated steel sheet having a suitable surface structure. As described above, the treatment bath is constituted of the surface treatment agent composition of the present invention.

As the counter electrode plate corresponding to the anode side, a titanium plate covered with iridium oxide can be suitably used. The counter electrode plate is required to be made of a material that is not dissolved into the treatment liquid during electrolysis and is desirably an insoluble anode having a low oxygen overvoltage.

Such a production process forms a treatment film containing a metal oxide and a polycarboxylic acid on the surface of the steel sheet. The treatment film will be described in detail in the description of the surface-treated steel sheet below.

As described above, the treatment bath (surface treatment agent composition) in the present invention is preferably constituted of an aqueous solution having a pH value of 1 to 5, more preferably 2.0 to 4.5, at 25°C. In general, there is a tendency that a low pH value of the treatment bath increases the allowable dissolved iron ion concentration, whereas a high pH value decreases the allowable dissolved iron ion concentration. Iron ions exceeding the allowable dissolved iron ion concentration float or precipitate in the treatment bath as oxides or hydroxides, which may be caught in the treatment film to reduce the corrosion resistance of the resulting film. Accordingly, it is desirable to promptly remove the iron ions deposited in the treatment bath.

Accordingly, in the method of producing the surface-treated steel sheet of the present invention, it is desirable to perform recycling treatment of the treatment bath by removing iron ions by increasing the pH value of the surface treatment agent composition in the treatment bath by about 0.2 to 0.5 for precipitating the chelate of polycarboxylic acid and iron ion as an iron compound, turning the pH value of the treatment bath to the original level, and then adding a polycarboxylic acid to the treatment bath so that the ratio [carboxyl group]/[Al] of the molar concentration [carboxyl group] of the carboxyl groups contained in the polycarboxylic acid to the molar concentration [Al] of the aluminum ions in the treatment bath is in a range of 0.005 to 2.0 to control the iron ion concentration in the treatment bath to be constantly 200 ppm or less. The polycarboxylic acid contained in the treatment bath is as described in the description about the surface treatment agent composition of the present invention.

The recycling treatment may be performed in another tank by transferring the treatment liquid thereto or may be performed in the circulation path of the surface treatment agent composition.

In the case of performing the recycling treatment in another tank, the pH value of the surface treatment agent composition is increased with ammonia to precipitate the iron ions captured by the polycarboxylic acid, and the precipitate is removed by a filter, for example. Subsequently, the pH value of the treatment liquid is decreased to the original level with nitric acid, and then a polycarboxylic acid is added to the treatment bath so that the ratio [carboxyl group]/[Al] of the molar concentration [carboxyl group] of the carboxyl groups contained in the polycarboxylic acid to the molar concentration [Al] of the aluminum ions in the treatment bath is in a range of 0.005 to 2.0.

In the case of performing the recycling treatment in the circulation path, it is preferable to adjust the pH value during the treatment bath operation to be higher than that in the recycling treatment in another tank to reduce the concentration of iron ions that can be dissolved in the treatment bath within a range that does not affect the film performance. The precipitated iron compounds are continuously removed with, for example, a filter provided in the circulation path, resulting in maintenance of the concentration of iron ions dissolved in the treatment bath to be 200 ppm or less.

The surface treatment agent composition constituting the treatment bath used in the method of producing a surface-treated steel sheet is the same as that described above, and the description thereof is omitted here.

### (Surface-treated steel sheet)

The surface-treated steel sheet of the present invention is a steel sheet provided with a treatment film on at least one surface thereof. The treatment film contains an oxide mixture of an iron-oxygen compound and an aluminum-oxygen compound and a polycarboxylic acid. The amount of aluminum is preferably 5 to 150 mg/m² and more preferably 17.2 to 102.1 mg/m² in terms of aluminum metal, and the carbon amount (hereinafter also referred to as "C amount") is preferably 0.1 to 5.0 mg/m² and more preferably 0.1 to 3.2 mg/m². Thus, the treatment film is mainly made of an aluminum-oxygen compound. Such a treatment film is formed on the surface of a steel sheet by performing cathodic electrolysis in a treatment bath containing the above-described surface treatment agent composition. An amount of aluminum contained in the treatment film less than the above-mentioned range deteriorates the corrosion resistance of the surface-treated steel sheet, whereas an amount higher than the above-mentioned range is uneconomical due to saturation of the performance. Consequently, the amount of aluminum in the film is preferably within the above-mentioned range. A C amount contained in the treatment film less than the above-mentioned range deteriorates the adhesion between the organic coating and the surface-treated steel sheet, whereas a C amount higher than the above-mentioned range deteriorates the corrosion resistance of the surface-treated steel sheet. Consequently, the C amount in the film is preferably within the above-mentioned range.

In addition, in the treatment film formed on the surface-treated steel sheet of the present invention, the atomic ratio, Fe/Al, of iron to aluminum, which can be measured by a method described in the following examples, is preferably 0.5 or less from the viewpoint of corrosion resistance.

A treatment film containing an appropriate amount of fluorine together with aluminum has a stabilization structure such as represented by AlO_{X}(OH)_{Y-Z}F_{Z} to inhibit a structural change of the treatment layer under a high-temperature high-humidity environment. As a result, a further stable surface can be retained. A treatment film containing an excessive amount of fluorine may be washed with water after electrolytic treatment. The washing may be performed with warm water or hot water. The water used in the washing may be adjusted to have a pH value in the alkaline side. The pH value may be controlled with any chemical species. It is thought that the film characteristics can be improved by controlling the fluorine amount in the film.

### (Surface-treated steel sheet with an organic coating)

In the surface-treated steel sheet with an organic coating of the present invention, the organic coating provided on the above-described surface-treated steel sheet is not specifically limited, and examples thereof include resin coatings composed of various thermoplastic resins and coating films composed of thermosetting resins. In these cases, a thermoplastic resin or a thermosetting resin is laminated on at least one surface of the surface-treated steel sheet to give a surface-treated steel sheet with an organic coating.

The resin coating composed of a thermoplastic resin may be an unstretched or biaxially stretched thermoplastic resin film, of which examples include films of olefin-based resins such as polyethylene, polypropylene, ethylene-propylene copolymers, ethylene-vinyl acetate copolymers, ethylene-acrylic ester copolymers, and ionomers; films of polyesters such as polyethylene terephthalate and polybutylene terephthalate; films of polyamides such as nylon 6, nylon 6,6, nylon 11, and nylon 12; polyvinyl chloride films; and polyvinylidene chloride films.

In formation of the organic coating, a layer of a known adhesive priming agent or adhesive can be provided between the surface-treated steel sheet and the thermoplastic resin coating. The adhesive priming agent has excellent adhesion to both a metal material and a film. Examples of the priming coating having excellent adhesion and corrosion resistance include phenol epoxy-based coatings composed of resol-type phenol aldehyde resins derived from various phenols and formaldehydes and bisphenol-type epoxy resins. In particular, a coating containing a phenol resin and an epoxy resin at a weight ratio of 50:50 to 1:99, particularly 40:60 to 5:95, can be preferably used. The adhesive priming agent is usually applied so as to have a thickness of 0.01 to 10 µm. The adhesive priming agent may be applied onto the surface-treated steel sheet in advance or may be applied to the thermoplastic resin film.

Preferred examples of the adhesive include urethane-based adhesives, epoxy-based adhesives, acid-modified olefin resin-based adhesives, copolyamide-based adhesives, and copolyester-based adhesives (thickness: 0.1 to 5.0 µm). Alternatively, a thermosetting coating may be applied to the surface-treated metal sheet side or the film side at a thickness range of 0.05 to 2 µm as an adhesive layer.

The coating film may be a thermosetting coating, for example, a modified epoxy coating such as phenol epoxy or amino-epoxy, a vinyl chloride-vinyl acetate copolymer, a saponified vinyl chloride-vinyl acetate copolymer, a vinyl chloride-vinyl acetate-maleic anhydride copolymer, an epoxy modified-, epoxyamino modified-, or epoxyphenol modified-vinyl coating, a modified vinyl coating, an acrylic coating, or a synthetic rubber-based coating such as a styrene-butadiene-based copolymer. These thermosetting coatings may be used alone or in combination of two or more thereof.

Among these resins, a resin coating composed of a polyester resin is most preferably used as a container material. Examples of the polyester resin include thermoplastic polyesters derived from an alcohol component mainly including ethylene glycol or butylene glycol and an aromatic dibasic acid derived from an acid component such as terephthalic acid, isophthalic acid, or naphthalene dicarboxylic acid.

Though polyethylene terephthalate itself can be used as a polyester, it is desirable to reduce the highest degree of crystallization to which a film can reach from the viewpoints of shock resistance and workability, and in order to achieve the reduction, it is desirable to introduce a copolymer ester unit other than the ethylene terephthalate into the polyester. It is particularly preferred to use a copolymer polyester mainly including ethylene terephthalate units or butylene terephthalate units and containing a small amount of other ester units and having a melting point of 210°C to 252°C. Note that homopolyethylene terephthalate generally has a melting point of 255°C to 265°C.

In general, preferably, in the copolymer polyester, 70% by mol or more, in particular, 75% by mol or more of the dibasic acid component is a terephthalic acid component; 70% by mol or more, in particular, 75% by mol or more of the diol component is ethylene glycol or butylene glycol; and 1% to 30% by mol, in particular, 5% to 25% by mol of the dibasic acid component is a dibasic acid component other than terephthalic acid.

Examples of the dibasic acid other than terephthalic acid include aromatic dicarboxylic acids such as isophthalic acid, phthalic acid, and naphthalene dicarboxylic acid; alicyclic dicarboxylic acids such as cyclohexane dicarboxylic acid; aliphatic dicarboxylic acids such as succinic acid, adipic acid, sebacic acid, and dodecanedioic acid; and dimer acids obtained through dimerization of unsaturated fatty acid having 10 to 25 carbon atoms. These dibasic acids can be used alone or in combination of two or more thereof. Examples of the diol component other than ethylene glycol and butylene glycol include propylene glycol, diethylene glycol, 1,6-hexylene glycol, cyclohexane dimethanol, and ethylene oxide adduct of bisphenol A. These diol compounds can be used alone or in combination of two or more thereof. In the combination of these comonomers, it is preferable to control the melting point of the copolymer polyester within the above-mentioned range.

In order to improve the melt flowability in molding, the polyester can contain at least one branched or crosslinked component selected from the group consisting of tri- or more-functional polybasic acids and polyols. The amount of these branched or crosslinked component is 3.0% by mol or less, preferably, within a range of 0.05% to 3.0% by mol.

Examples of the tri- or more-functional polybasic acids and polyols include polybasic acids such as trimellitic acid, pyromellitic acid, hemimellitic acid, 1,1,2,2-ethane tetracarboxylic acid, 1,1,2-ethane tricarboxylic acid, 1,3,5-pentane tricarboxylic acid, 1,2,3,4-cyclopentane tetracarboxylic acid, and biphenyl-3,4,3',4'-tetracarboxylic acid; and polyols such as pentaerythritol, glycerol, trimethylolpropane, 1,2,6-hexanetriol, sorbitol, and 1,1,4,4-tetrakis(hydroxymethyl)cyclohexane.

In the surface-treated steel sheet with an organic coating of the present invention, particularly preferred examples of the polyester resin that can be used as a material for manufacturing a can include polyethylene terephthalate/isophthalate containing 5% to 25% by mol of an isophthalic acid component and polyethylene/cyclohexylene dimethylene terephthalate containing 1% to 10% by mol of a cyclohexane dimethanol component.

The homopolyester and the copolymer polyester each should have a molecular weight within the film-forming range and preferably have an intrinsic viscosity [η] measured using a solvent mixture of phenol and tetrachloroethane within a range of 0.5 to 1.5, in particular, 0.6 to 1.5.

The thermoplastic resin coating used for the surface-treated steel sheet with an organic coating of the present invention may be formed from any single polyester or copolyester mentioned above, a mixture of two or more of the polyesters and/or the copolyesters, or a mixture of the polyester and/or the copolyester and another thermoplastic resin. Examples of the mixture of two or more of the polyesters and/or the copolyesters include, but not limited to, combinations of two or more selected from polyethylene terephthalate, polybutylene terephthalate, polyethylene terephthalate/isophthalate, and polyethylene/cyclohexylene dimethylene terephthalate.

Examples of another thermoplastic resin that can be contained in the polyester include ethylene-based polymers, thermoplastic elastomers, polyacrylates, and polycarbonates. The addition of at least one of these modified resin components can further improve the heat and humidity resitance and the shock resistance. The amount of the modified resin component is generally up to 50 parts by weight, most preferably 5 to 35 parts by weight, based on 100 parts by weight of the polyester.

Examples of the ethylene-based polymer include low-, medium-, and high-density polyethylenes, linear low density polyethylenes, linear ultra low density polyethylene, ethylene-propylene copolymers, ethylene-butene-1 copolymers, ethylene-propylene-butene-1 copolymers, ethylene-vinyl acetate copolymers, ionically crosslinked olefin copolymers (ionomers), and ethylene-acrylate copolymers. Among these polymers, preferred are ionomers, of which base polymers are, for example, ethylene-(meth)acrylate copolymers and ethylene-(meth)acrylate-(meth)acrylic acid copolymers and of which ion species are, for example, Na, K, and Zn. Usable examples of the thermoplastic elastomer include styrene-butadiene-styrene block copolymers, styrene-isoprene-styrene block copolymers, hydrogenated styrene-butadiene-styrene block copolymers, and hydrogenated styrene-isoprene-styrene block copolymers.

The polyarylate is defined as a polyester derived from a dihydric phenol and a dibasic acid. Usable examples of the dihydric phenol include bisphenols such as 2,2'-bis(4-hydroxyphenyl)propane (bisphenol A), 2,2'-bis(4-hydroxyphenyl)butane (bisphenol B), 1,1'-bis(4-hydroxyphenyl)ethane, bis(4-hydroxyphenyl)methane (bisphenol F), 4-hydroxyphenyl ether, and p-(4-hydroxy)phenol. Bisphenol A and bisphenol B are preferred. Usable examples of the dibasic acid include terephthalic acid, isophthalic acid, 2,2-(4-carboxyphenyl)propane, 4,4'-dicarboxydiphenyl ether, and 4,4'-dicarboxybenzophenone. The polyarylate may be a homopolymer derived from the above-mentioned monomer component or may be a copolymer.

Alternatively, the polyarylate may be a copolymer with an ester unit derived from an aliphatic glycol and a dibasic acid within a range that does not deteriorate the essential qualities. These polyarylates are available, for example, as U-series or AX-series of U-polymers of Unitika Ltd., Ardel D-100 of UCC Co., APE of Bayer Co., Durel of Hoechst Co., Arylon of Du Pont Co. and NAP Resin of Kaneka Corp.

The polycarbonate is a carbonate ester resin derived from a bicyclic dihydric phenol and phosgene and is characterized by its high glass transition temperature and high heat resistance. Preferred examples of the polycarbonate include bisphenols, e.g., those derived from 2,2'-bis(4-hydroxyphenyl)propane (bisphenol A), 2,2'-bis(4-hydroxyphenyl)butane (bisphenol B), 1,1'-bis(4-hydroxyphenyl)ethane, bis(4-hydroxyphenyl)methane (bisphenol F), 1,1-bis(4-hydroxyphenyl)cyclohexane, 1,1-bis(4-hydroxyphenyl)cyclopentane, 1,1-bis(4-hydroxyphenyl)-1-phenylmethane, 1,1-bis(4-hydroxyphenyl)-1-phenylethane, and 1,2-bis(4-hydroxyphenyl)ethane.

The thermoplastic resin coating of the surface-treated steel sheet with an organic coating of the present invention may be a resin monolayer or a resin multilayer formed by, for example, coextrusion. In a polyester resin multilayer, advantageously, it is possible to select a polyester resin having a composition excellent in adhesion as an underlying layer, i.e., as the layer on the surface-treated steel sheet side and to select a polyester resin having a composition excellent in content resistance, i.e., excellent in extraction resistance and non-adsorption of flavor component, as the surface layer.

Examples of the polyester resin multilayer being shown as surface layer/underlying layer include, but not limited to, polyethylene terephthalate/polyethylene terephthalate·isophthalate, polyethylene terephthalate/polyethylene·cyclohexylene dimethylene·terephthalate, polyethylene terephthalate·isophthalate (in which the content of the isophthalate is low)/polyethylene terephthalate·isophthalate (in which the content of the isophthalate is high), and polyethylene terephthalate·isophthalate/(a mixture of polyethylene terephthalate·isophthalate and polybutylene terephthalate·adipate). The thickness ratio, the surface layer : the underlying layer, is desirably within a range of 5:95 to 95:5.

The organic coating can contain known additives for resin, for example, an anti-blocking agent such as amorphous silica, an inorganic filler, various anti-static agents, a lubricant, an antioxidant, and an UV absorber, in accordance with known prescriptions.

In particular, tocopherol (vitamin E) is preferably used. Tocopherol is known as an antioxidant that prevents a decrease in molecular weight caused by degradation of a polyester resin in heat treatment and thereby improves the dent resistance. In particular, addition of the tocopherol to a polyester composition including a polyester resin and the above-mentioned ethylene-based polymer as a modified resin component can provide an effect of significantly improving not only dent resistance but also corrosion resistance, and even if a film has cracks due to severe conditions such as retort sterilization or hot bender, corrosion from the cracks can be prevented from progressing.

The amount of the tocopherol is preferably 0.05% to 3% by weight, in particular, 0.1% to 2% by weight.

In the present invention, the thickness of the organic coating is desirably within a range of 3 to 50 µm, in particular 5 to 40 µm, in the case of a thermoplastic resin coating. In the case of a coating film, the thickness after baking is preferably within a range of 1 to 50 µm, in particular 3 to 30 µm. A thickness smaller than the above-mentioned range provides insufficient corrosion resistance, whereas a thickness larger than the range tends to cause a problem in workability.

In the present invention, the organic coating can be formed on the surface-treated steel sheet by any arbitrary process. For example, a coating with a thermoplastic resin can be performed by extrusion coating, cast film thermobonding, or biaxially stretched film thermobonding. In the extrusion coating, a polyester resin in a molten state is extruded onto the surface of a surface-treated steel sheet and thermally adheres to the surface. That is, a polyester resin is molten and kneaded with an extruder and is then extruded from a T-die into a thin film, and the extruded molten resin film is allowed, together with a surface-treated steel sheet, to pass between a pair of laminating rollers. The resin film and the steel sheet are unified by pressing with cooling and are then quenched. In extrusion coating of a polyester resin multilayer, an extruder for a surface layer and an extruder for an underlying layer are used. The resin flows from the extruders are joined in a multiple multilayer die, followed by extrusion coating as in a resin monolayer. Alternatively, a coating layer of a polyester resin can be formed on each of both surfaces of a surface-treated steel sheet by allowing the surface-treated steel sheet to perpendicularly pass between a pair of laminating rollers and supplying molten resin webs on both sides thereof.

Specifically, in extrusion coating, the surface-treated steel sheet with an organic coating composed of a polyester resin is produced as follows. A surface-treated steel sheet is pre-heated with a heater as necessary and is supplied to a nip position between a pair of laminating rollers. A polyester resin is extruded from the die head of an extruder into a thin film form. The thin film is supplied between a laminating roller and the surface-treated steel sheet and is pressure bonded to the surface-treated steel sheet with laminating rollers. The laminating rollers are maintained at a certain temperature and press-bond a thin film composed of a thermoplastic resin such as polyester to a surface-treated steel sheet to thermally bond the both and also cool them from both sides to provide a surface-treated steel sheet with an organic coating. In general, the resulting surface-treated steel sheet with an organic coating is further quenched by being introduced into, for example, a water tank for cooling to prevent thermal crystallization.

In the extrusion coating, the polyester resin layer has a low degree of crystallization, i.e., the density difference from the amorphous density is suppressed to 0.05 g/cm³ or less, by appropriately selecting the resin composition and quenching with rollers and a cooling tank. Consequently, sufficient workability for the subsequent processes such as can manufacturing processing and lid processing is guaranteed. The process of quenching is not limited to those described above. For example, the resulting surface-treated steel sheet with an organic coating can also be quenched by spraying a cooling water or rapidly cooling the laminated sheet.

The thermobonding of a polyester resin to a surface-treated steel sheet is achieved by the thermal energy of the molten resin layer and the thermal energy of the surface-treated steel sheet. The heating temperature of the surface-treated steel sheet is preferably 90°C to 290°C, in particular, 100°C to 280°C, whereas the heating temperature of the laminating rollers is preferably in a range of 10°C to 150°C.

The surface-treated steel sheet with an organic coating of the present invention can also be produced by thermally bonding a polyester resin film formed in advance by a T-die method or an inflation film forming method to a surface-treated steel sheet. The film may be an unstretched, non-orientation film formed by a casting method through quenching an extruded film or may be a biaxially stretched film formed by sequential or simultaneous biaxial stretching of the cast film at an elongation temperature and subsequent heat setting of the film.

### (Can body and can lid)

The can body of the present invention may be produced by any method from the above-described surface-treated steel sheet with an organic coating and can be formed into a three-piece can. The three-piece can is formed by bending the surface-treated steel sheet with an organic coating such that the organic coating is the inside of the can and welding or heat sealing the ends and therefore has a seam in the side wall. The can is produced by any known process.

The can lid of the present invention may be produced by any known method from the above-described surface-treated steel sheet with an organic coating. In general, the can lid can be applied to a stay-on-tab type or full-open type easy-open can lid or a flat lid.

### (Seamless can)

The seamless can (e.g., two-piece can or DR can) of the present invention can also be produced by any method from the above-described surface-treated steel sheet with an organic coating and is produced so as to have the organic coating inside the can by a known procedure such as a drawing process, a drawing·redrawing process, a bending-stretching process (stretching process) through drawing·redrawing, a bending-stretching·ironing process through drawing·redrawing, or a drawing·ironing process. In particular, the organic coating is preferably a thermoplastic resin coating formed by extrusion coating. That is, since the surface-treated steel sheet with an organic coating has excellent processing adhesion, the surface-treated steel sheet exhibits excellent coating adhesion even in severe processing and can thereby provide a seamless can having excellent corrosion resistance.

### (Exposure of iron to the steel sheet surface)

As described above, in the steel sheet to be treated in the present invention, iron is exposed to at least a part of a surface other than the end faces. In such a steel sheet, iron may be exposed to the entire surface. That is, the steel sheet may be a cold rolled steel sheet. In a case of using a cold rolled steel sheet as the steel sheet, the effects of the present invention can be particularly high.

### EXAMPLES

The present invention will now be more specifically described by examples, but is not limited to these examples. The materials to be treated, the degreasing agent, and the organic coating used in the following examples were appropriately selected from commercially available materials and do not limit the actual treatment liquid for surface treatment and surface treatment process of the present invention.

### [Types of treatment bath]

Surface treatment agent compositions each having an unadjusted pH value were prepared by mixing the respective components such that the resulting aqueous solution contains aluminum ions and a polycarboxylic acid at concentrations shown in the columns "Al" and "Polyitaconic acid", respectively, in Table 1. Polyitaconic acid, aluminum nitrate, and sodium fluoride were used as the polycarboxylic acid, the aluminum agent, and the fluorine agent, respectively. Based on the mass concentrations (ppm) of these components, the molar concentrations (mmol/L) of aluminum ions, fluorine, and the carboxyl groups contained in the polycarboxylic acid and the molar ratio ([carboxyl group]/[Al]) of the molar concentrations (mmol/L) of the carboxyl groups contained in the polycarboxylic acid to the aluminum ions were calculated. The results are shown in Table 1. The concentration of the carboxyl groups contained in the polycarboxylic acid (polyitaconic acid) can be calculated by dividing the mass concentration (ppm) of the polyitaconic acid by a half of the molecular weight of itaconic acid as the constitutional unit. The pH value is a level at 25°C (the same applies to the following).

**[Table 1]**

| Mixture No. | Al (ppm) | F (ppm) | Polycarboxylic acid (ppm) | Glycine (ppm) | [Al] (mmol/L) | [F] (mmol/L) | [Carboxylic group] (mmol/L) | [Carboxylic group]/[Al] (Molar ratio) |
|---|---|---|---|---|---|---|---|---|
| A | 1500 | 2300 | 500 | 0 | 56 | 121 | 4 | 0.069 |
| B | 1500 | 2300 | 250 | 0 | 56 | 121 | 2 | 0.035 |
| C | 1500 | 2300 | 125 | 0 | 56 | 121 | 1 | 0.017 |
| D | 5000 | 2300 | 500 | 0 | 185 | 121 | 4 | 0.021 |
| XA | 1500 | 2300 | 0 | 0 | 56 | 121 | 0 | 0 |
| XB | 1500 | 2300 | 0 | 4100 | 56 | 121 | 0 | 0 |
| XC | 0 | 0 | 500 | 0 | 0 | 0 | 4 | - |

### [Production of surface-treated steel sheet]

The samples used in the following examples and comparative examples were low-carbon cold rolled steel sheets each having a thickness of 0.225 mm, unless specifically mentioned. Pretreatment was performed by electrolytic degreasing in an aqueous solution of a commercially available degreasing agent (Surf Cleaner 322N8, manufactured by Nippon Paint Co., Ltd.), water washing, pickling through immersion in an aqueous sulfuric acid solution, and then water washing. Subsequently, surface treatment by providing electricity with a current density of 1 to 10 A/dm² for 0.15 seconds and no electricity for 0.50 seconds was repeated one to ten cycles, followed by water washing and then drying to give a surface-treated steel sheet. On this occasion, the water washing or pure water washing may be performed with warm water or hot water and may be performed so as to reduce excessive fluorine in the film to further improve the characteristics of the film for some applications.

### [Process of producing surface-treated steel sheet with an organic coating]

The surface-treated steel sheets prepared above were each laminated with a non-orientation polyethylene terephthalate film (polyester film having a thickness of 20 µm) copolymerized with 15 mol% of isophthalic acid for the inner surface of a can and a non-orientation polyethylene terephthalate film (polyester film having a thickness of 13 µm and containing titanium oxide as a white pigment) copolymerized with 15 mol% of isophthalic acid for the outer surface of the can to produce a surface-treated steel sheet with an organic coating.

The lamination of a polyester film was performed by thermocompression bonding of the polyester film to a heated surface-treated steel sheet with laminating rollers and immediately cooling them. The heating temperature for this process was 250°C. In the case of laminating a stretched film, the heating temperature of the surface-treated steel sheet and the temperature of the laminating rollers were controlled such that the film after the lamination had appropriate orientation.

### [Measurement of treatment bath component]

The concentrations of aluminum and iron in the film formed on a surface-treated steel sheet were measured with an ICP emission spectrometer, ICPE-9000 (manufactured by Shimadzu Corporation), and the organic carbon amount (C amount) in the film was measured with a total organic carbon analyzer, TOC-5000 (manufactured by Shimadzu Corporation).

### [Measurement of film amount]

The amount of aluminum in the film formed on a surface-treated steel sheet was measured with an X-ray fluorescence spectrometer, ZSX100e (manufactured by Rigaku Corporation), and the C amount in the film was measured with a carbon·hydrogen/water analyzer, RC612 (manufactured by LECO Corporation).

### [Spot measurement of atomic ratio (Fe/Al) of iron to aluminum in film]

The surface-treated steel sheet after the surface treatment was cut out and was subjected to analysis with FE-AES (JAMP-9500F, manufactured by JEOL Ltd.) to measure the atomic ratio (Fe/Al) of iron to aluminum in the film. The analyses of iron and aluminum were each performed by point analysis in the depth direction at an accelerating voltage of 10 kV in a visual field of 30 k magnification. The etching rate was 2.5 nm/once in terms of SiO₂. The peaks of iron and aluminum used in the analysis were approximately 712 eV and 1390 eV, respectively. Each difference between the maximum value and the minimum value obtained by differentiation of the resulting spectrum by the analysis was used as the signal strength. Based on the obtained signal strengths, atomic concentrations were calculated by quantitative analysis using known relative sensitivity factors, and atomic ratio Fe/Al of iron to aluminum was determined. The atomic concentration was calculated with analytical software, Specta Investigater (manufactured by JEOL Ltd.). The calculation can also be performed using another similar analytical software. The atomic ratios Fe/Al at the film surface portion and the film central portion were determined.

### [Evaluation of cross-cut corrosion resistance]

A cross-cut having a length of 4 cm and reaching the base material was formed with a cutter on the surface corresponding to the inner side of a can of the surface-treated steel sheet with an organic coating. The steel sheet was immersed in commercially available coffee (trade name: Blendy·Bottle Coffee Low Sugar, manufactured by Ajinomoto General Foods, Inc.) at 37°C, and the condition of corrosion over time was evaluated. During the evaluation, the coffee was regularly replaced by fresh one for reducing the growth of mold as much as possible.

Each test strip was evaluated for spread of discoloring to one side from the cross-cut portion by the following evaluation criteria: a spread of less than 0.5 mm: 5 points, a spread of 0.5 mm or more and less than 1 mm: 4 points, a spread of 1 mm or more and less than 2 mm: 3 points, a spread of 2 mm or more and less than 3 mm: 2 points, and a spread of 3 mm or more: 0 point. A test strip of 3 points or more was determined to be usable.

### [Adhesion evaluation]

Each surface-treated steel sheet with an organic coating prepared above was cut into a strip having a width of 15 mm and a length of 70 mm. A cut reaching the base material was made in the strip at the position of 30 mm from one end of the strip on the surface opposite to the measurement surface. The test strip was subjected to hot-water retort treatment at 120°C for 30 minutes and was then immersed in water and the test strip was pulled up from the water immediately before the measurement. Only the metal piece of the test strip was broken into two pieces from the cut formed in advance to give a site at which the two pieces are connected to each other with only the resin film corresponding to the inner side of a can. The test strip was folded in the direction of 180 degrees such that the site is the inner side and was subjected to a peeling test by peeling in the direction of 180 degrees at a tensile rate of 5 mm/min with a tensile tester. The results were used as the adhesion strengths. In the evaluation, a maximum tensile load of 5 N/15 mm or more when a test strip was peeled off was determined as a satisfactory range. Note that the term "N/15 mm" refers to the strength (N) of a test strip having a width of 15 mm.
○: adhesion strength of 5 N/15 mm or more,
Δ: adhesion strength of 1 N/15 mm or more and less than 5 N/15 mm, and
×: adhesion strength of less than 1 N/15 mm.

### (Example 1)

A solution containing 100 ppm (mass concentration, the same applies to the following) of iron ions was prepared by adding an aqueous iron nitrate solution to mixture A shown in Table 1 as a treatment bath. In the preparation, ammonia or nitric acid was added to the solution for maintaining the PH value to be 2.5. This solution is a mimic condition of a treatment bath containing iron ions eluted from a steel sheet as a result of surface treatment of the steel sheet. Note that also in the following examples and comparative examples, in order to produce a mimic condition of a treatment bath containing iron ions eluted from a steel sheet, iron ions may be added to a solution (treatment bath) as shown in each Table.

Subsequently, the solution was put in a container having an internal diameter of 45 mm and was adjusted to a pH value of 3.0 or 3.5 with ammonia, followed by leaving to stand for 6 hours. The precipitation height was visually measured. In addition, the concentrations of aluminum ions and iron ions in the supernatant were measured. The results are shown in Table 2. In the column of "Presence of precipitation" in Table 2, the numerical value shown in parentheses after "Yes" indicates the height of the resulting precipitate.

### (Example 2)

Example 2 was performed as in Example 1 except that mixture B was used as the treatment bath.

### (Example 3)

Example 3 was performed as in Example 1 except that the solution put in a container was adjusted so as to have a pH value of 3.5.

### (Examples 4 and 5)

Examples 4 and 5 were performed as in Example 3 except that mixtures B and C were respectively used as the respective treatment baths.

### (Example 6)

Example 6 was performed as in Example 2 except that the solution had an iron ion concentration of 150 ppm.

### (Examples 7 and 8)

Examples 7 and 8 were performed as in Example 1 except that mixture C was used as the treatment bath and that the solution had an iron ion concentration of 200 ppm or 250 ppm.

### (Comparative Examples 1 to 3)

Comparative Examples 1 to 3 were performed as in Example 1 except that mixtures XA, XB, and XC were respectively used as the treatment baths.

**[Table 2]**

| | Mixture No. | Initial pH | Fe content (ppm) | pH after adjustment | Presence of precipitation | Concentration in supernatant (ppm) | | Removal of iron from bath |
|---|---|---|---|---|---|---|---|---|
| | | | | | | Al | Fe | |
| Example 1 | A | 2.5 | 100 | 3.0 | Yes (10mm) | 1500 | 40 | effective |
| Example 2 | B | 2.5 | 100 | 3.0 | Yes (7mm) | 1500 | 50 | effective |
| Example 3 | A | 2.5 | 100 | 3.5 | Yes (12mm) | - | - | effective |
| Example 4 | B | 2.5 | 100 | 3.5 | Yes (10mm) | - | - | effective |
| Example 5 | C | 2.5 | 100 | 3.5 | Yes (9mm) | - | - | effective |
| Example 6 | B | 2.5 | 150 | 3.0 | Yes (12mm) | 1500 | 90 | effective |
| Example 7 | C | 2.5 | 200 | 3.0 | Yes (7mm) | - | - | effective |
| Example 8 | C | 2.5 | 250 | 3.0 | Yes (10mm) | 1500 | 190 | effective |
| Comparative Example 1 | XA | 2.5 | 100 | 3.0 | No | 1500 | 100 | ineffective |
| Comparative Example 2 | XB | 2.5 | 100 | 3.0 | No | 1500 | 100 | ineffective |
| Comparative Example 3 | XC | 2.5 | 100 | 3.0 | No | 0 | 100 | ineffective |

### (Example 9)

A steel sheet was subjected to degreasing and pickling and then subjected to cathodic electrolytic treatment at a current density of 1 A/dm² three cycles with mixture A shown in Table 1 as the treatment bath in accordance with the method of producing a surface-treated steel sheet described above to produce a surface-treated steel sheet. The resulting surface-treated steel sheet was heated to a sheet temperature of 250°C with a hot plate, and then polyester films were laminated to both surfaces of the steel sheet by the above-described procedure, followed by quenching in water to produce a surface-treated steel sheet with an organic coating. Subsequently, the surface-treated steel sheet with an organic coating was cut into a 45-mm square. The end faces were covered with tape, and a sample was produced in accordance with the cross-cut corrosion resistance evaluation described above. The degree of corrosion in coffee under an atmospheric pressure at 37°C was evaluated after four weeks. Evaluation results are shown in Table 3.

### (Examples 10 to 12)

Examples 10 to 12 were performed as in Example 9 except that the cathodic electrolytic treatment at a current density of 4 A/dm² was performed one, five, or ten cycles.

### (Examples 13 to 18)

Examples 13 to 18 were performed as in Example 9 except that an aqueous iron nitrate solution was added to the treatment bath such that the iron ion concentration was 50, 100, or 200 ppm and that the cathodic electrolytic treatment was performed at a current density of 4 A/dm² one cycle or five cycles.

### (Example 19)

Example 19 was performed as in Example 9 except that the pH value of the treatment bath was adjusted to be 3.5 and that the cathodic electrolytic treatment was performed two cycles.

### (Example 20)

Example 20 was performed as in Example 9 except that the pH value of the treatment bath was adjusted to be 3.0 and that the cathodic electrolytic treatment at a current density of 1 A/dm² was performed 12 cycles.

### (Examples 21 and 22)

Examples 21 and 22 were performed as in Example 9 except that mixture B shown in Table 1 was used as the treatment bath and that the cathodic electrolytic treatment was performed one cycle or five cycles.

### (Examples 23 to 28)

Examples 23 to 28 were performed as in Examples 21 and 22 except that the iron ion concentration in the treatment bath was 50, 100, or 200 ppm.

### (Examples 29 and 30)

Examples 29 and 30 were performed as in Example 9 except that mixture C shown in Table 1 was used as the treatment bath and that the cathodic electrolytic treatment was performed one cycle or three cycles.

### (Examples 31 and 32)

Examples 31 and 32 were performed as in Examples 29 and 30 except that the iron ion concentration in the treatment bath was 50 ppm.

### (Comparative Example 4)

Comparative Example 4 was performed as in Example 1 except that the steel sheet was merely immersed in the bath for 30 seconds without performing cathodic electrolysis.

### (Comparative Example 5)

Comparative Example 5 was performed as in Comparative Example 4 except that the iron ion concentration in the treatment bath was 200 ppm.

### (Comparative Example 6)

Comparative Example 6 was performed as in Example 1 except that mixture XA shown in Table 1 was used as the treatment bath and that the cathodic electrolytic treatment at a current density of 4 A/dm² was performed five cycles.

### (Comparative Example 7)

Comparative Example 7 was performed as in Comparative Example 6 except that the iron ion concentration in the treatment bath was 200 ppm.

### (Comparative Example 8)

A steel sheet was subjected to degreasing, water washing, pickling, and water washing and then subjected to treatment with 130 mg/m² of chromium and 20 mg/m² of chromium hydrous oxide for one surface and was then immediately washed with water, followed by drying to give a steel sheet treated with chromate on the surface. Subsequently, lamination with polyester films was performed as in Example 9. In the column of "Mixture" in Tables 3, 5, and 6, the term "TFS" indicates that a chromium-based treatment bath was used.

**[Table 3]**

| | Mixture | pH | Fe content (ppm) | Electrolytic treatment | Electrolysis conditions | | | Immersion time (sec) | Film amount (mg/m₂) | | Atomic ratio Fe/Al | | Crosscut corrosion | Adhesion | Note |
|---|---|---|---|---|---|---|---|---|---|---|---|---|---|---|---|
| | | | | | Current density (A/dm²) | Current flow time (sec) | Number of cycles (times) | | Al | C | Film surface portion | Film central port ion | | | |
| Example9 | A | 2.5 | 0 | Done | 1 | 0.15 | 3 | 0 | 32.8 | 1.1 | | | 5 | ○ | |
| Example10 | | | 0 | Done | 4 | 0.15 | 1 | 0 | 28.6 | 1.4 | | | 5 | ○ | |
| Example11 | | | 0 | Done | 4 | 0.15 | 5 | 0 | 57.0 | 1.2 | 0.11 | 0.11 | 5 | ○ | |
| Example12 | | | 0 | Done | 4 | 0.15 | 10 | 0 | 102.1 | 3.2 | | | 5 | ○ | |
| Example13 | | | 50 | Done | 4 | 0.15 | 1 | 0 | 28.6 | 1.5 | | | 5 | ○ | |
| Example14 | | | 50 | Done | 4 | 0.15 | 5 | 0 | 68.9 | 1.2 | | | 5 | ○ | |
| Example15 | | | 100 | Done | 4 | 0.15 | 1 | 0 | 28.7 | 0.8 | | | 5 | ○ | |
| Example16 | | | 100 | Done | 4 | 0.15 | 5 | 0 | 63.9 | 0.4 | | | 5 | ○ | |
| Example17 | | | 200 | Done | 4 | 0.15 | 1 | 0 | 25.5 | 0.3 | | | 3 | ○ | |
| Example18 | | | 200 | Done | 4 | 0.15 | 5 | 0 | 65.7 | 0.1 | 0.37 | 0.34 | 3 | ○ | |
| Example19 | | 3.5 | 0 | Done | 4 | 0.15 | 2 | 0 | 42.5 | 0.2 | | | 5 | ○ | |
| Example20 | | 3.0 | 0 | Done | 1 | 0.15 | 12 | 0 | 40.8 | 0.4 | | | 5 | ○ | |
| Example21 | B | 2.5 | 0 | Done | 4 | 0.15 | 1 | 0 | 27.9 | 0.9 | | | 5 | ○ | |
| Example22 | | | 0 | Done | 4 | 0.15 | 5 | 0 | 66.9 | 0.6 | | | 5 | ○ | |
| Example23 | | | 50 | Done | 4 | 0.15 | 1 | 0 | 19.0 | 0.1 | | | 5 | ○ | |
| Example24 | | | 50 | Done | 4 | 0.15 | 5 | 0 | 69.7 | 0.3 | | | 5 | ○ | |
| Example25 | | | 100 | Done | 4 | 0.15 | 1 | 0 | 17.7 | 0.1 | | | 4 | ○ | |
| Example26 | | | 100 | Done | 4 | 0.15 | 5 | 0 | 61.9 | 0.1 | | | 4 | ○ | |
| Example27 | | | 200 | Done | 4 | 0.15 | 1 | 0 | 17.2 | 0.3 | | | 3 | ○ | |
| Example28 | | | 200 | Done | 4 | 0.15 | 5 | 0 | 51.1 | 0.1 | | | 3 | ○ | |
| Example29 | D | 2.5 | 0 | Done | 4 | 0.15 | 1 | 0 | 36.4 | 0.9 | | | 5 | ○ | |
| Example30 | | | 0 | Done | 4 | 0.15 | 3 | 0 | 57.6 | 0.5 | | | 5 | ○ | |
| Example31 | | | 50 | Done | 4 | 0.15 | 1 | 0 | 35.0 | 0.1 | | | 5 | ○ | |
| Example32 | | | 50 | Done | 4 | 0.15 | 3 | 0 | 50.8 | 0.1 | | | 5 | ○ | |
| Comparative Example4 | A | 2.5 | 0 | None | - | - | - | 30 | 44.4 | 1.3 | 0.13 | 0.23 | 3 | ○ | |
| Comparative Example5 | | | 200 | None | - | - | - | 30 | 41.2 | 0.7 | 0.33 | 0.55 | 2 | Δ | |
| Comparative Example6 | XA | 2.5 | 0 | Done | 4 | 0.15 | 5 | 0 | 66.1 | 0 | 0.06 | 0.06 | 4 | ○ | |
| Comparative Example7 | | | 200 | Done | 4 | 0.15 | 5 | 0 | 66.1 | 0 | 0.51 | 0.51 | 2 | Δ | |
| Comparative Example8 | TFS | - | - | Done | - | - | - | - | - | - | | | 5 | ○ | Chromate |

### (Examples 33 and 34)

A solution containing 200 ppm of iron ions was prepared by adding an aqueous iron nitrate solution to mixture A shown in Table 1 as a treatment bath. In the preparation, ammonia water or nitric acid was added to the solution for maintaining the pH value to be 2.5. This solution was used as the treatment bath. A steel sheet was subjected to degreasing, water washing, pickling, and water washing and was then subjected to cathodic electrolytic treatment at a current density of 4 A/dm² five cycles. Subsequently, the treatment bath was transferred to another tank and was controlled to have a pH value of 3.0 with ammonia water. The precipitate was removed with filter, and the pH value was adjusted to 2.5 again with nitric acid. Subsequently, a surface-treated steel sheet was produced in the same way as before the removal of the precipitate and was laminated with polyester films, followed by cross-cut corrosion resistance evaluation as in Example 9. This test is carried out on the assumption of continuous operation and evaluates the effect of surface treatment in a recycled treatment bath. Accordingly, a surface-treated steel sheet produced for the first time was not used, and a surface-treated steel sheet produced for the second time (after removal of precipitate from the treatment bath) was laminated and was evaluated. Table 4 shows the bath concentrations before and after the removal of precipitate and the evaluation results.

### (Comparative Examples 9 and 10)

Comparative Examples 9 and 10 were performed as in Examples 33 and 34 except that mixture XA shown in Table 1 was used as the treatment bath.

**[Table 4]**

| | Mixture | Bath condition | pH | Concentration (ppm) | | Atomic ratio Fe/Al | | Crosscut corrosion | Continuous operation |
|---|---|---|---|---|---|---|---|---|---|
| | | | | Al | Fe | Film surface portion | Film central portion | | |
| Example33 | A | Before filtration | 2.5 | 1500 | 230 | 0.37 | 0.34 | 3 | ○ |
| Example34 | A | After filtration | 2.5 | 1500 | 100 | 0.19 | 0.23 | 4 | ○ |
| Comparative Example9 | XA | Before filtration | 2.5 | 1500 | 260 | 0.51 | 0.51 | 3 | × |
| Comparative Example10 | XA | After filtration | 2.5 | 1500 | 260 | 0.50 | 0.49 | 3 | × |

### (Examples 35 and 36)

Solutions having iron ion concentrations of 0 ppm and 200 ppm were prepared by adding an aqueous iron nitrate solution to mixture A shown in Table 1 as treatment baths. Steel sheets subjected to electrolytic degreasing, water washing, pickling, and water washing were immersed in the respective treatment baths for cathodic electrolysis at a current density of 4 A/dm² five cycles. Subsequently, the resulting surface-treated steel sheets were each coated with an epoxy acrylic water based paint such that the thickness after baking was 5 µm, followed by hardening by baking in a hot air drying furnace at 200°C for 10 minutes to give a surface-treated steel sheet with an organic coating.

### [Evaluation of coating film adhesion of surface-treated steel sheet with an organic coating]

The produced surface-treated steel sheet with an organic coating was provided with a grid-like cut with a cutter and was subjected to a tape-peeling test. The peeling ratio was determined by visual inspection. The evaluation criteria are as follows. The results are shown in Table 5.
⊚: a peeling ratio of 5% or less,
○: a peeling ratio of higher than 5% and not higher than 10%,
Δ: a peeling ratio of higher than 10% and not higher than 20%, and
×: a peeling ratio of higher than 20%.

### [Processing adhesion of surface-treated steel sheet with an organic coating]

A cross-cut reaching the steel sheet face was formed on the surface of the surface-treated steel sheet with an organic coating with a cutter, and Erichsen bulging was performed using the intersection of the cross-cut as the center with a bulging height of 5 mm. After the bulging processing, peeling with tape was performed, and the degree of peeling was visually evaluated. The results are shown in Table 5.
⊚: no peeling,
○: peeling of not more than 20% of the bulging portion,
Δ: peeling of more than 20% and not more than 50% of the bulging portion, and
×: peeling of more than 50% of the bulging portion.

### (Comparative Example 11)

A steel sheet was subjected to degreasing, water washing, pickling, and water washing and then subjected to treatment with 130 mg/m² of chromium and 20 mg/m² of chromium hydrous oxide for one surface and was then immediately washed with water, followed by drying to give a steel sheet treated with chromate on the surface.

Subsequently, the resulting surface-treated steel sheet was coated with an epoxy acrylic water based paint as in Example 35 to obtain the surface-treated steel sheet with an organic coating.

### (Examples 37 and 38)

Solutions having iron ion concentrations of 0 ppm and 200 ppm were prepared by adding an aqueous iron nitrate solution to mixture A shown in Table 1 as treatment baths. Steel sheets

**[Table 5]**

| | Mixture | pH | Fe content (ppm) | Film amount (mg/m²) | | Coating film adhesion | Processing adhesion | Note |
|---|---|---|---|---|---|---|---|---|
| | | | | Al | C | | | |
| Example35 | A | 2.5 | 0 | 41 | 1.3 | ⊚ | ⊚ | |
| Example36 | A | 2.5 | 200 | 48 | 0.3 | ⊚ | ⊚ | |
| Comparative Example11 | TFS | - | - | - | - | ⊚ | ⊚ | Chromate |

subjected to degreasing, water washing, pickling, and water washing were immersed in the respective treatment baths for cathodic electrolysis at a current density of 4 A/dm² five cycles. Subsequently, the resulting surface-treated steel sheets were each heated on a hot plate so as to have a surface temperature of 250°C and were each laminated with a polyester film with laminating rollers and quenched in water to give a surface-treated steel sheet with an organic coating.

### [Production of metal can]

Paraffin wax was applied to both surfaces of the resulting surface-treated steel sheet with an organic coating for electrostatic oiling. The steel sheet was punched into a circle having a diameter of 143 mm, which was formed into a cup by shallow-drawing in accordance with a common method. Subsequently, this shallow drawn cup was subjected to a simultaneous drawing and ironing process twice to be formed into a cup having a small diameter and a large height. The thus prepared cup had the following characteristics:
Cup diameter: 52.0 mm,
Cup height: 111.7 mm, and

The thickness ratio of the can wall to the original sheet thickness: -30%.

The cup was subjected to doming and then heat treatment at 220°C for 60 seconds to remove the distortion of the resin film, followed by trimming of the open end, curved surface printing, neck-in processing into dimension 200, and flange processing to produce a 200-g seamless can.

### [Evaluation of metal can processing adhesion]

A linear cut was formed on the outer surface of the shallow drawn cup at the position 15 mm from the top. The cup was peeled off in the direction of 180 degrees in the can height direction in accordance with adhesion evaluation described above with a tensile tester to measure the adhesion strength. The retort treatment of the test strips was omitted.

When a test strip was peeled off with a tensile tester, one having a maximum tensile strength of 3 N/15 mm or more was determined as ⊚, one having a maximum tensile strength of 0.5 N/15 mm or more and less than 3.0 N/15 mm was determined as o, and one having a maximum tensile strength of less than 0.5 N/15 mm was determined as ×.

### [Evaluation of metal can cross-cut corrosion resistance]

A can side wall portion was cut out from the resulting metal can, and the end faces were coated with tape. A cross-cut having a length of 4 cm was formed with a cutter at the position 50 mm from the can bottom. The can was immersed in commercially available coffee (trade name: Blendy·Bottle Coffee Low Sugar, manufactured by Ajinomoto General Foods, Inc.). After four weeks, the can was evaluated as in the evaluation of cross-cut corrosion resistance described above. The results are shown in Table 6.

### (Comparative Example 12)

A steel sheet was subjected to degreasing, water washing, pickling, and water washing and then subjected to treatment with 130 mg/m² of chromium and 20 mg/m² of chromium hydrous oxide for one surface and was then immediately washed with water, followed by drying to give a steel sheet treated with chromate on the surface. Subsequently, the resulting steel sheet was laminated with a polyester film as in Example 37 to produce a surface-treated steel sheet with an organic coating.

**[Table 6]**

| | Mixture | pH | Fe concentration | Film amount (mg/m²) | | Metal can crosscut corrosion resistance | Metal can processing adhesion | Note |
|---|---|---|---|---|---|---|---|---|
| | | | | Al | C | | | |
| Example37 | A | 2.5 | 0 | 41 | 1.3 | 5 | ⊚ | |
| Example38 | A | 2.5 | 200 | 48 | 0.3 | 3 | ⊚ | |
| Comparative Example12 | TFS | - | - | - | - | 5 | ⊚ | Chromate |

As shown in Table 2, in a treatment bath containing a polycarboxylic acid, i.e., polyitaconic acid, when the concentration of iron ions in the treatment bath was 100 ppm, precipitation occurred at a pH value 3.0 (Examples 1 and 2). In the treatment bath not containing polyitaconic acid, the treatment bath composed of polyitaconic acid only, and the treatment bath containing a relatively common complexing agent glycine, no precipitation occurred even at a pH value of 3.0 (Comparative Examples 1, 2, and 3). Accordingly, it was revealed that a polycarboxylic acid, i.e., polyitaconic acid, induces precipitation of iron ions to allow removal of iron components at a pH value level near that in treatment conditions from the early stage. In addition, it was revealed that in a treatment bath containing a polycarboxylic acid, i.e., polyitaconic acid, the precipitation height was further increased by raising the pH value level to be higher than 3.0 to effectively remove the iron components (Examples 3 to 5). In addition, the precipitation height was increased with an increase in proportion of polyitaconic acid in the treatment bath, which demonstrates that iron components can be removed by adding a large amount of polyitaconic acid to the treatment bath (Examples 1 and 2, 3 to 5). In addition, it was revealed that the precipitation height increases with the concentration of iron ions (Examples 6 to 8). As obvious from the concentrations of aluminum ions and iron ions in the treatment bath after a change in pH value of the bath, it was revealed that the addition of polyitaconic acid can reduce the Fe concentration in the bath without decreasing the aluminum concentration. In the case of glycine, which does not cause precipitation, the same effect cannot be obtained even if the pH value was raised.

As obvious from Table 3, in a surface-treated steel sheet having a film containing 10 to 150 mg/m² of aluminum and 0.1 to 3.5 mg/m² of carbon prepared by electrolytic treatment, corrosion hardly occurred in the steel sheets with cross-cuts by immersion. Thus, the steel sheets all had excellent corrosion resistance (Examples 9 to 32), cross-cut corrosion resistance equivalent to that of TFS containing chromium was obtained. In contrast, in the surface-treated steel sheet prepared by only immersion treatment without performing electrolytic treatment, the cross-cut corrosion resistance was low (Comparative Examples 4 and 5) to make application to a can difficult. Even if the treatment bath did not contain polyitaconic acid, corrosion resistance with an applicable level could be obtained when the iron ion concentration of the treatment bath was 0 ppm (Comparative Example 6), but an increase in iron ion concentration in the bath deteriorated the cross-cut corrosion resistance regardless of electrolytic treatment (Comparative Example 7). Accordingly, the proportion of iron atoms in a film increases with the iron ion concentration in the treatment bath to show a tendency of deterioration in cross-cut corrosion resistance. However, the presence of polyitaconic acid in the treatment bath shows an effect of preventing the film from being contaminated with iron atoms. It is obvious that a further increase of the iron ion concentration in the treatment bath increases the proportion of iron atoms in the film to deteriorate the cross-cut corrosion resistance. Accordingly, the iron ion concentration in the treatment bath is desirably 200 ppm or less.

As also obvious from Table 4, in a treatment bath containing polyitaconic acid, the aluminum ion concentration in the treatment bath hardly varied before and after removal of precipitate with a filter, whereas the iron ion concentration decreased. The atomic ratio Fe/Al of the film of an electrolytic treatment steel sheet prepared with a treatment solution after filtration was lower than that of the film prepared with a treatment solution before the filtration, and the cross-cut corrosion resistance was improved. Accordingly, recycling treatment can maintain the performance necessary for a surface-treated steel sheet, such as cross-cut corrosion resistance, and therefore allows continuous operation. In contrast, in a treatment bath not containing polyitaconic acid, precipitate is not generated. Accordingly, iron ions in the treatment bath cannot be removed even by performing filtration treatment, and iron ions increase with the area of electrolytic treatment, resulting in a difficulty of continuous operation.

As also obvious from Tables 5 and 6, in the surface-treated steel sheet with an organic coating of the present invention, the processing adhesion was satisfactory both in application of epoxy acrylic water based paint and in lamination with a polyester film. In addition, the can had satisfactory metal can processing adhesion and metal can cross-cut corrosion resistance at the side wall portion and also had performance equivalent to that of TFS containing chromium.

### INDUSTRIAL APPLICABILITY

The surface treatment bath of the present invention contains a polycarboxylic acid, which captures iron ions eluted into the treatment bath from a steel sheet, to maintain the concentration of iron ions in the treatment bath to be a certain level or less. Consequently, the surface treatment bath of the present invention can form a film having excellent corrosion resistance on the surface of the steel sheet and can produce a surface-treated steel sheet having excellent corrosion resistance and excellent adhesion with a coating film. In particular, the treatment bath can be suitably used in production of an organic surface-treated steel sheet for can manufacturing.

The surface treatment bath of the present invention and the surface-treated steel sheet with an organic coating produced using the surface treatment bath are excellent in processing adhesion in coating and can therefore be suitably used not only in three-piece cans and can lids but also in seamless cans that are produced by a known procedure that requires advanced process such as a bending-stretching process (stretching process) through drawing·redrawing, a bending-stretching·ironing process through drawing·redrawing, or a drawing·ironing process.

Furthermore, the can body and the can lid of the present invention have excellent corrosion resistance and therefore can be suitably used as containers and lids for highly corrosive contents or contents requiring retort sterilization.

## Claims

1. A surface treatment agent composition for a steel sheet, the composition being used in electrolytic surface treatment of a steel sheet having a surface to which iron is at least partially exposed, and the composition comprising aluminum ions, fluorine ions, and a polycarboxylic acid.

2. The surface treatment agent composition for a steel sheet according to Claim 1, wherein
the polycarboxylic acid is a homopolymer containing a monomer selected from acrylic acid, methacrylic acid, maleic acid, and itaconic acid as a constitutional unit or a copolymer containing at least one of these monomers as the constitutional unit.

3. The surface treatment agent composition for a steel sheet according to Claim 1 or 2, wherein
a ratio [carboxyl group]/[Al] of a molar concentration [carboxyl group] of carboxyl groups contained in the polycarboxylic acid to a molar concentration [A1] of the aluminum ions is 0.005 to 2.0.

4. The surface treatment agent composition for a steel sheet according to any one of Claims 1 to 3, wherein
the polycarboxylic acid is polyitaconic acid.

5. The surface treatment agent composition for a steel sheet according to any one of Claims 1 to 3, wherein
a ratio [F]/[Al] of a molar concentration [F] of the fluorine ions to a molar concentration [Al] of the aluminum ions is 1 to 4.

6. The surface treatment agent composition for a steel sheet according to any one of Claims 1 to 5, wherein
a mass concentration of the aluminum ions is 100 to 10000 ppm.

7. The surface treatment agent composition for a steel sheet according to any one of Claims 1 to 6, wherein
the surface treatment agent composition has a pH value of 1 to 5 at 25°C.

8. The surface treatment agent composition for a steel sheet according to any one of Claims 1 to 7, wherein
the surface treatment agent composition contains iron ions having a mass concentration of 200 ppm or less.

9. A method of producing a surface-treated steel sheet, comprising subjecting a steel sheet having a surface to which iron is at least partially exposed to cathodic electrolysis in a surface treatment bath containing aluminum ions, fluorine ions, and a polycarboxylic acid to form a treatment film on the surface of the steel sheet, wherein
the treatment film contains a metal-oxygen compound and a polycarboxylic acid;
the metal-oxygen compound contains oxygen compounds of aluminum and iron in which the main component is the aluminum-oxygen compound; and
the treatment film has an aluminum amount of 5 to 150 mg/m² and a carbon amount of 0.1 to 5.0 mg/m², in terms of metal element.

10. The method of producing a surface-treated steel sheet according to Claim 9, wherein
the polycarboxylic acid is a homopolymer containing a monomer selected from acrylic acid, methacrylic acid, maleic acid, and itaconic acid as a constitutional unit or a copolymer containing at least one of these monomers as the constitutional unit.

11. The method of producing a surface-treated steel sheet according to Claim 9 or 10, wherein
in the surface treatment bath, a ratio [carboxyl group]/[Al] of a molar concentration [carboxyl group] of carboxyl groups contained in the polycarboxylic acid to a molar concentration [Al] of the aluminum ions is 0.005 to 2.0.

12. The method of producing a surface-treated steel sheet according to any one of Claims 9 to 11, wherein
the polycarboxylic acid is polyitaconic acid.

13. The method of producing a surface-treated steel sheet according to any one of Claims 9 to 12, wherein
in the surface treatment bath, a ratio [F]/[Al] of a molar concentration [F] of the fluorine ions to a molar concentration [Al] of the aluminum ions is 1 to 4.

14. The method of producing a surface-treated steel sheet according to any one of Claims 9 to 13, wherein
in the surface treatment bath, a mass concentration of the aluminum ions is 100 to 10000 ppm.

15. The method of producing a surface-treated steel sheet according to any one of Claims 9 to 14, wherein
the surface treatment bath has a pH value of 1 to 5 at 25°C.

16. The method of producing a surface-treated steel sheet according to any one of Claims 9 to 15, wherein
the surface treatment bath contains iron ions having a mass concentration of 200 ppm or less.

17. A surface-treated steel sheet comprising a surface treatment film containing a metal-oxygen compound and a polycarboxylic acid formed on a steel sheet having a surface to which iron is at least partially exposed, wherein
the metal-oxygen compound contains aluminum and iron and mainly includes an aluminum-oxygen compound; and
the surface treatment film has an aluminum amount of 5 to 150 mg/m² and a carbon amount of 0.1 to 5.0 mg/m², in terms of metal element.

18. The surface-treated steel sheet according to Claim 17, wherein
the surface treatment film has an atomic ratio (Fe/Al) of iron to aluminum of 0.5 or less.

19. The surface-treated steel sheet according to Claim 17 or 18, wherein
the polycarboxylic acid is a homopolymer containing a monomer selected from acrylic acid, methacrylic acid, maleic acid, and itaconic acid as a constitutional unit or a copolymer containing at least one of these monomers as the constitutional unit.

20. A surface-treated steel sheet with an organic coating, comprising a surface-treated steel sheet according to any one of Claims 17 to 19 and a thermoplastic resin laminated on at least one surface of the steel sheet.

21. A surface-treated steel sheet with an organic coating, comprising a surface-treated steel sheet according to any one of Claims 17 to 19 and a thermosetting resin laminated on at least one surface of the steel sheet.

22. A can lid molded from a surface-treated steel sheet with an organic coating according to Claim 20 or 21.

23. A can body molded from a surface-treated steel sheet with an organic coating according to Claim 20 or 21.

24. A seamless can molded from a surface-treated steel sheet with an organic coating according to Claim 20 or 21 by drawing/bending-stretching and/or ironing.
